# FASCICULE DE BREVET EUROPEEN

(11) **EP 2 247 538 B1**
(45) Date de publication et mention de la délivrance du brevet: **25.01.2012**
(21) Numéro de dépôt: 09753700.5
(22) Date de dépôt: 24.02.2009
(51) Int. Cl.: C02F 3/12, C02F 3/22, C02F 3/20, C02F 3/00, C02F 3/30

(54) **DISPOSITIF D'EPURATION D'EAUX RESIDUAIRES URBAINES PAR BOUES ACTIVEES EN REACTEUR FERME**
VORRICHTUNG ZUR REINIGUNG STÄDTISCHER ABWÄSSER DURCH AKTIVIERTEN SCHLAMM IN EINEM GESCHLOSSENEN REAKTOR
DEVICE FOR PURIFYING MUNICIPAL WASTEWATER BY ACTIVATED SLUDGE IN A CLOSED REACTOR

(30) Priorité: 29.05.2008 EP 08009794
(43) Date de publication de la demande: 10.11.2010
(73) Titulaire: Welter, André, 7517 Mersch (LU)
(72) Inventeur: Welter, André, 7517 Mersch (LU)
(74) Mandataire: Lecomte, Didier
(86) Numéro de dépôt international: PCT/EP2009/052177
(87) Numéro de publication internationale: WO 2009/144045

(56) Documents cités:
- DE-A1- 4 110 026
- US-A- 3 807 563

## Description

### Objet de l'invention

La présente invention se rapporte à un dispositif d'épuration par traitement biologique des eaux usées domestiques ou industrielles provenant de réseaux d'égout séparatifs ou unitaires.

### Etat de la technique

Le traitement des eaux usées s'effectue généralement dans des stations d'épuration, et comprend communément trois étapes, appelées traitement primaire, traitement secondaire, et traitement tertiaire.

Le traitement primaire concerne toutes les particules contenues dans les eaux usées qui peuvent être extraites par voie mécanique, à savoir par tamisage, filtration, centrifugation et/ou décantation ou flottation. Parmi ces particules, on trouve par exemple du gravier, du sable, du limon, des déchets variés tel que du métal, du bois, des matières plastiques, du papier, des tissus, mais également des matières organiques telles que des graisses, des huiles, et toutes sortes de déchets issus de l'activité humaine domestiques. Leur séparation ou extraction se fait à l'entrée de la station d'épuration par l'emploi de divers dispositifs tels que des grilles, des tamis, des dessableurs, des dégraisseurs, des séparateurs et des bassins de décantation.

Les traitements secondaires et tertiaires concernent toute matière qui n'a pas été extraite par le traitement primaire, à savoir les particules fines en suspension et les substances en solution.

Le traitement secondaire s'effectue par voie biologique, raison pour laquelle il est communément appelé « traitement biologique ». Ce traitement se compose de deux processus.

Le premier processus reproduit les phénomènes d'autoépuration existant dans la nature, et repose sur l'activité des bactéries contenues dans les eaux usées pour dégrader la matière organique. Ainsi un réacteur biologique entretient une culture de bactéries, agglomérées sous la forme de flocs (agrégats), ou de biofilms (bactéries sur support) dont l'ensemble forme la biomasse. Cette culture bactérienne nécessite des conditions favorables à sa croissance. Dans un réacteur riche en oxygène, les matières organiques à base de carbone et d'azote sont métabolisées par une biomasse aérobie et transformées en dioxyde de carbone, qui s'échappe du réacteur, mais également en nitrates et nitrites, qui restent en solution.

A l'issue de ce processus, le réacteur contient un mélange d'eau épurée et de biomasse qu'il est nécessaire de séparer afin de pouvoir déverser l'eau épurée dans une rivière émissaire, ce qui est réalisé au moyen du deuxième processus.

Au cours de ce deuxième processus, la séparation de l'eau et de la biomasse se fait généralement par décantation dans un dispositif distinct du réacteur biologique (dans un décanteur dit secondaire) par l'action de la gravité ou par l'utilisation de dispositifs de filtration. Or, dans le cas de réacteurs à flocs, donc à biomasse libre, appelés réacteurs à boues activées, le flux d'eau du bassin d'activation vers le décanteur entraîne une partie de la biomasse hors du bassin d'activation. Il en résulte une diminution continuelle de la quantité de biomasse dans le bassin d'activation, ce qui a pour conséquence de réduire l'efficacité épuratoire dudit bassin et donc du réacteur biologique. C'est pourquoi, la biomasse, issue de la décantation doit être réinjectée dans le bassin d'activation du réacteur pour y continuer son activité. Néanmoins, cette solution requiert l'utilisation de dispositifs de collecte des boues et de dispositifs de pompage, et nécessite également un apport en énergie pour le fonctionnement des dispositifs en question.

De plus, un décanteur secondaire présente l'inconvénient de ne pas pouvoir fonctionner avec une forte teneur en biomasse. Généralement, pour de tels dispositifs, la teneur en matière sèche se situe à environ 3,5 kg /m³, sans dépasser 4 kg/m³.

Le traitement secondaire permet ainsi de réduire la quantité de substances organiques contenues dans l'eau usée, et permet donc une épuration de l'eau. Auparavant, le traitement secondaire terminait le processus épuratoire, et les eaux ainsi traitées, mais contenant les dérivés azotés et du phosphore, étaient déversées dans les cours d'eau et les lacs, ce qui avait un impact négatif du point de vue environnemental.

C'est pourquoi le traitement tertiaire a été introduit dans le processus épuratoire afin de réduire, voire éliminer, les composés azotés et le phosphore.

Concernant l'élimination des composés azotés, le traitement tertiaire consiste à utiliser les bactéries dites dénitrifiantes pour dégrader les nitrites et nitrates en azote gazeux. Comme les bactéries dénitrifiantes nécessitent des conditions anaérobies, cette opération est réalisée généralement soit dans deux réacteurs séparés, soit dans un réacteur unique qui est alors appelé réacteur mixte.

Pour ce qui concerne l'élimination du phosphore, les procédés utilisés pour son élimination sont très variés. On peut citer, à titre d'exemple, l'utilisation d'agents chimiques qui permettent la précipitation des composés phosphorés.

Parmi les réacteurs de traitement des eaux usées utilisés pour le traitement secondaire on trouve des réacteurs dits « combinés » car ils mettent en oeuvre un brassage et une aération du mélange eau/biomasse/matières organiques (appelé liqueur mixte), tout en permettant une décantation de l'eau épurée. De plus, les réacteurs biologiques combinant un traitement secondaire et un traitement tertiaire sont également bien connus et sont généralement appelés des réacteurs « mixtes ».

Dans les réacteurs combinés ou mixtes l'aération de la liqueur mixte est assurée par des aérateurs, dont il existe différents types, alors que le brassage est assuré par des agitateurs mécaniques. Néanmoins, la dissociation de la fonction d'aération et de brassage présente l'inconvénient de nécessiter deux dispositifs différents.

Il existe néanmoins des aérateurs qui assurent également une fonction de brassage de la biomasse, c'est le cas, par exemple d'un dispositif de pompage par injection d'air, encore appelé « Airlift » utilisé dans un réacteur biologique combiné comme décrit dans le document US3807563 conforme au préambule de la revendication 1 ou dans le document US4211657. Ce dispositif permet, grâce à l'injection d'air dans la partie inférieure d'une canalisation, d'y entrainer le liquide qui s'y trouve par un effet gravitationnel basé sur la différence de densité entre la masse d'eau expansée par fines bulles de gaz et la masse d'eau non expansée. Utilisé dans un réacteur biologique, le dispositif permet de créer une circulation de la liqueur mixte et d'en assurer l'agitation, tout en permettant également de l'oxygéner.

Des réacteurs biologiques combinés et mixtes, existent par ailleurs. Il s'agit par exemple du réacteur biologique décrit dans le document DE4110026, dans lequel le traitement tertiaire est obtenu en faisant circuler l'air en circuit fermé. Sans apport d'air frais, l'air circulant dans le réacteur s'appauvrit en oxygène, les conditions anaérobies s'établissent alors.

Par ailleurs, les documents DE3916520 et JP9323092 décrivent des réacteurs biologiques combinés et mixtes dans lesquels le brassage des boues est assuré par un dispositif de type airlift. Il s'agit de réacteurs qui sont compartimentés d'une part en une zone aérobie dans laquelle le brassage et l'oxygénation de la liqueur mixte se fait, et d'autre part en une zone anaérobie, dans laquelle la dénitrification peut s'effectuer. Néanmoins dans de tels réacteurs, le traitement tertiaire est peu efficace car, non seulement les conditions anaérobies sont insuffisantes, mais de plus, le volume alloué à la dénitrification est faible, ce qui ne permet pas d'obtenir une dénitrification efficace.

Qu'il s'agisse des réacteurs biologiques combinés ou des réacteurs biologiques combinés et mixtes, il apparait que, quelque soit le système d'aération utilisé, la décantation de l'eau épurée est peu efficace car les turbulences de la liqueur mixte provoquées par le dispositif d'aération se propagent à la zone de décantation, ce qui a pour conséquence de provoquer des remous qui perturbent fortement le processus de décantation ou de séparation.

Ainsi, la technique actuelle ne propose pas de deux zones, qui doivent nécessairement être en communication pour le transfert des boues, mais qui doivent présenter des degrés d'agitation totalement différents (forte agitation pour la chambre d'activation et repos parfait dans la zone de décantation).

De plus, les réacteurs connus de l'état de la technique sont en outre, non seulement d'un coût de fabrication et de fonctionnement élevé, mais ils sont également mal adaptés pour une utilisation dans un réseau d'égout mixte transportant des débits élevés en période de pluie.

### Buts de l'invention

La présente invention propose un réacteur de traitement biologique des eaux usées qui ne présente pas les inconvénients de l'état de la technique.

La présente invention propose un réacteur de traitement biologique des eaux usées qui est une alternative aux solutions existantes.

Elle vise à fournir un réacteur de traitement biologique des eaux usées qui réduit la propagation des perturbations, engendrées par la zone d'aération et de brassage, à la zone de décantation.

Elle vise à fournir un réacteur de traitement biologique des eaux usées qui fonctionne avec une forte teneur en biomasse et une faible production de boues excédentaires.

Elle vise également à fournir un réacteur de traitement biologique des eaux usées qui fournit une eau épurée de haute qualité.

Elle vise de plus à fournir un réacteur de traitement biologique des eaux usées dans lequel les traitements secondaire et tertiaire peuvent être réalisés dans la même enceinte du réacteur.

Elle vise à fournir un réacteur de traitement biologique des eaux usées qui n'émet pas de gaz malodorants.

Elle vise également à fournir un réacteur de traitement biologique des eaux usées qui ne présente un minimum d'équipement en mouvement et aucun équipement en mouvement sous eau.

Elle vise également à fournir un réacteur de traitement biologique peu complexe, facile à mettre en oeuvre et facile d'entretien.

Elle vise de plus à fournir un réacteur de traitement biologique des eaux usées qui réduit la consommation d'énergie.

### Résumé de l'invention

La présente invention décrit un réacteur de traitement biologique des eaux usées comprenant un bassin de section tronconique, des moyens d'entrée de l'eau usée à épurer, des moyens de sortie de l'eau épurée, des moyens d'évacuation des boues excédentaires, des moyens d'alimentation en gaz, des moyens d'aération disposés dans la partie inférieure dudit bassin, au moins un conduit élévateur surplombant lesdits moyens d'aération et comprenant un plateau épandeur de section tronconique qui comprend une couronne de déversement, une couverture disposée sur ledit plateau épandeur, ladite couverture comprenant un diffuseur de section conique ou tronconique, un collecteur de gaz et une paroi plongeante.

Selon des formes particulières de réalisation de l'invention, celle-ci comporte l'une ou une combinaison quelconque de plusieurs des caractéristiques suivantes :
- les parois latérales du bassin forment, avec le plan horizontal formé par la base dudit bassin, un angle α d'au moins 60°,
- les parois latérales du plateau épandeur forment, avec le plan horizontal formé par la base dudit bassin, un angle β de moins de 25°,
- les parois latérales du diffuseur forment, avec le plan horizontal formé par la base du bassin, un angle γ de moins de 12°,
- la paroi plongeante forme avec le plan vertical un angle compris entre 0 et 30°,
- les moyens d'aération comprennent au moins un aérateur comprenant une membrane déformable percée de trous,
- les moyens d'alimentation en gaz comprennent au moins un compresseur,
- le collecteur de gaz se présente sous la forme d'une galerie circonférentielle raccordée au bord du diffuseur et comprend une buse d'évacuation du gaz,
- le réacteur comprend des moyens de recyclage du gaz des moyens d'aération, lesdit moyens de recyclage du gaz comprenant au moins une canalisation raccordée à la conduite qui dirige ledit gaz vers une vanne à quatre voies et vers les moyens d'alimentation en gaz.
- la couverture comprend un diffuseur comprenant une surélévation centrale cylindrique, un déflecteur de section essentiellement conique, ledit déflecteur comprenant une ouverture centrale,
- les moyens de sortie de l'eau épurée comprennent un chenal-collecteur disposé de façon circonférentielle sur la partie supérieure du bassin.
- le bassin a la forme d'un tronc de cône ou une forme prismatoïde.

La présente invention décrit également une méthode de traitement des eaux usées comprenant les étapes suivantes :
a) prendre le réacteur biologique selon l'invention,
b) remplir ledit réacteur avec de la liqueur mixte,
c) alimenter ledit réacteur avec de l'eau usée à épurer,
d) réaliser un traitement biologique aérobie de ladite eau usée en aérant le mélange de liqueur mixte et d'eau usée à l'aide d'un gaz,
e) réaliser la régénération de la biomasse filtrante par l'arrêt temporaire des moyens d'aération ou au moyen de la vanne de la surélévation centrale,
f) réaliser un traitement biologique anaérobie de ladite eau usée en interrompant périodiquement l'aération réalisé à l'étape d) ou en recyclant périodiquement ledit gaz,
g) séparer la liqueur mixte en eau épurée et en biomasse,
h) récupérer l'eau épurée.

Selon une forme particulière de réalisation de la méthode selon l'invention, les étapes d) et f) forment un cycle de traitement biologique, et la durée de l'étape d) est d'environ une heure et la durée de l'étape f) d'environ une heure trente minutes pour un cycle de traitement biologique d'environ deux heures et trente minutes.

### Brève description des figures

La figure 1 représente schématiquement une première forme de réalisation du réacteur de traitement biologique selon l'invention.

La figure 2 représente schématiquement une première forme que peut prendre le bassin du réacteur de traitement biologique selon l'invention.

La figure 3 représente schématiquement une seconde forme que peut prendre le bassin du réacteur de traitement biologique selon l'invention.

La figure 4 représente schématiquement une seconde forme de réalisation du réacteur de traitement biologique selon l'invention.

La figure 5 représente schématiquement une troisième forme de réalisation du réacteur de traitement biologique selon l'invention.

La figure 6 représente schématiquement une quatrième forme de réalisation du réacteur de traitement biologique selon l'invention.

La figure 7 représente schématiquement une cinquième forme de réalisation du réacteur de traitement biologique selon l'invention.

La figure 8 représente schématiquement une sixième forme de réalisation du réacteur de traitement biologique selon l'invention.

La figure 9 représente schématiquement la zone de décantation du réacteur de traitement biologique selon l'invention.

La figure 10 représente schématiquement les agrégats (flocs) de bactéries formant la biomasse filtrante.

### Description détaillée de l'invention

Le réacteur biologique selon l'invention comprend un bassin 1 de traitement biologique, qui a une section tronconique. Cette forme tronconique présente l'avantage de permettre d'éviter le dépôt et l'accumulation de biomasse présente dans le réacteur. De préférence, les parois latérales du bassin 1 forment un angle α avec le plan horizontal formé par la petite base de la section tronconique et cet angle α est de préférence d'au moins environ 60°.

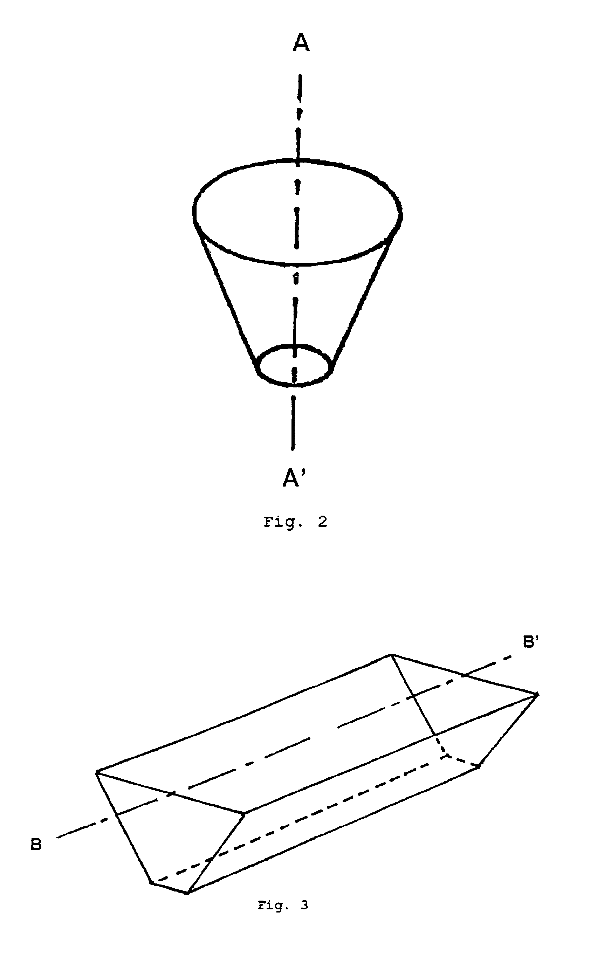

Dans une première forme de réalisation du réacteur selon l'invention, le bassin 1 a la forme d'un tronc de cône qui peut être illustré comme étant la répétition de la section tronconique du bassin 1 autour de l'axe de rotation A-A' (figure 2). Le bassin 1 est alors un tronc de cône inversé, ayant la forme d'un entonnoir, dont le plan formé par la petite base se situe dans la partie inférieure du bassin 1. La base 2 du bassin 1 est alors de forme circulaire.

Dans cette forme de réalisation, la forme en tronc de cône du bassin 1 présente de nombreux avantages, notamment le fait que le régime des vitesses de circulation du liquide présent dans le bassin 1 est identique pour toutes les sections verticales et radiales du réacteur.

Dans une seconde forme de réalisation du réacteur selon l'invention, le bassin 1 a une forme prismatoïde qui peut être illustré comme étant la répétition de la section tronconique du bassin 1 le long de l'axe de translation B-B' (figure 3). La base 2 du bassin 1 est alors de forme rectangulaire.

Contrairement à un réacteur ayant un bassin 1 en forme de tronc de cône, qui, pour des raisons de contraintes liées a sa construction, ne peut pas avoir une profondeur qui dépasse 12 m, et qui présente donc une capacité limitée, un réacteur ayant un bassin 1 de forme prismatoïde représente une alternative de plus grande capacité. Un tel réacteur peut avoir une longueur de 30m. De plus, il est également possible de réaliser des bassins accolés pour atteindre ainsi une capacité encore plus importante.

Dans l'une ou l'autre des formes de réalisation du bassin 1 décrite précédemment, le réacteur selon l'invention comprend les éléments décrits dans ce qui suit.

De préférence, la base 2 du bassin 1 comprend les moyens d'aération 7. Il s'agit de tous moyens d'aération adéquats, utilisant tout gaz adéquat, et pouvant être couplés à tous moyens adéquats d'alimentation en gaz 19, en particulier en gaz sous pression.

De préférence, les moyens d'aération 7 comprennent au moins un aérateur à membrane comprenant un corps et une membrane déformable percée de trous. Avantageusement, le corps a la forme d'une assiette, sur laquelle est fixée la membrane, et il est alimenté en gaz, de l'air par exemple, par une canalisation 8. La membrane, finement percée de pores, est de telle sorte que ces pores ne laissent pas entrer l'eau, mais sous la pression du gaz, la membrane se déforme et les pores s'ouvrent pour laisser ainsi échapper le gaz sous la forme de fines bulles.

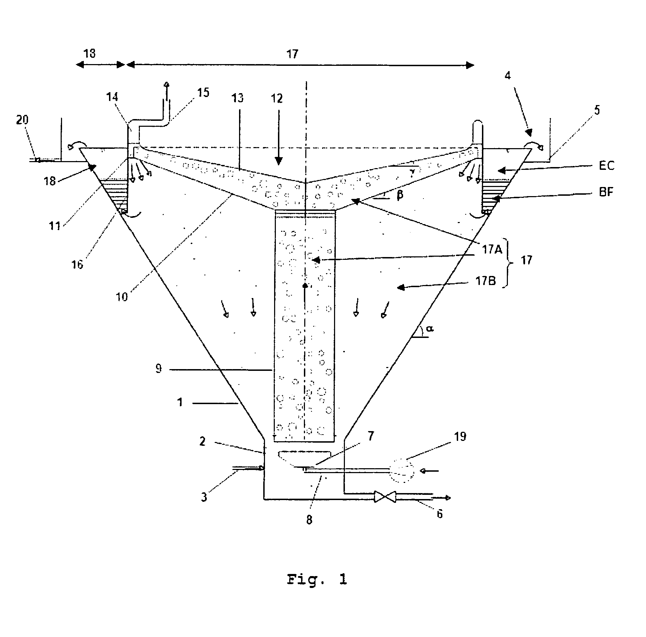

Dans une première forme de réalisation des moyens d'aération 7 selon l'invention, dans le cas d'une petite installation de traitement correspondant à environ 10 à 20 équivalents-habitants par exemple, les moyens d'aération 7 comprennent un seul aérateur (Fig.1).

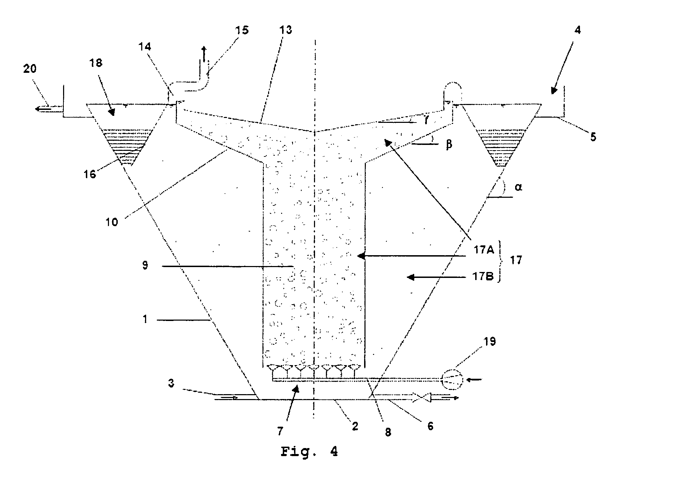

Dans une seconde forme de réalisation des moyens d'aération 7, dans le cas d'une installation correspondant à environ 1000 équivalents-habitants par exemple, les moyens d'aération 7 comprennent plusieurs aérateurs à membrane (fig. 4), disposés par exemple de façon à former un champ d'aération de forme circulaire.

De préférence, la base 2 du bassin 1 comprend en outre des moyens d'entrée 3 de l'eau usée à épurer et des moyens d'évacuation 6 des boues excédentaires.

Le bassin 1 comprend en outre des moyens de sortie 4 de l'eau épurée qui comprennent un chenal-collecteur 5, disposé sur la partie supérieure et sur toute la circonférence du bassin 1, et qui assure la collecte de l'eau épurée. L'évacuation de l'eau épurée du chenal-collecteur 5 peut être assurée par tous moyens adéquats, de préférence il s'agit d'une canalisation 20.

Dans une forme particulière de réalisation de l'invention, au centre du bassin 1 et surplombant les moyens d'aération 7, se trouve un conduit élévateur 9, en acier par exemple, de forme cylindrique ou essentiellement tronconique ou tronconique, de diamètre égal ou inférieur à celui de l'aérateur. Le conduit élévateur 9 permet la remontée de la liqueur mixte vers la partie supérieure du bassin par un effet gravitationnel de type « airlift ». Dans sa partie inférieure, le conduit 9 n'est pas en contact avec la paroi du bassin 1 ; un espace subsiste afin de permettre la circulation de la liqueur mixte. Dans sa partie supérieure, le conduit 9 comprend un plateau épandeur 10.

Dans une autre forme particulière de réalisation de l'invention, le réacteur comprend plusieurs conduits 9, surplombant un ou plusieurs aérateurs, dont les parties supérieures se rejoignent en un plateau épandeur 10. De préférence, dans ce mode de réalisation, les aérateurs forment un champ circulaire, et le diamètre du conduit-élévateur 9 est inférieur ou égal à celui du champ circulaire d'aérateurs.

Le plateau épandeur 10 a une section tronconique. De préférence, il a une forme d'un tronc de cône renversé, et il comprend une couronne de déversement 11 disposée sur sa circonférence.

Le conduit-élévateur 9 et le plateau-épandeur 10 subdivisent la chambre d'activation 17 en deux zones d'activité distinctes au sein du bassin 1, une zone d'aération et de brassage 17A, et une zone de réaction et d'amortissement 17B où la métabolisation du substrat prédomine.

Le flux de liqueur mixte transportée par le conduit élévateur 9 s'épand sur le plateau-épandeur 10 en circulant vers son pourtour ce qui permet à la liqueur mixte d'être acheminée substantiellement horizontalement vers la périphérie de la zone d'aération et de brassage 17A puis de retomber dans la zone de réaction et d'amortissement 17B par l'intermédiaire de la couronne de déversement 11.

La couronne de déversement 11, agissant à la manière d'un déversoir, forme un barrage hydraulique, séparant les zones 17A et 17 B, ne permettant pas aux fortes turbulences présentes dans la zone d'aération et de brassage 17A de se propager à la zone de réaction et d'amortissement 17B, qui est parfaitement calme.

Les parois latérales du plateau épandeur 10 forment avec le plan horizontal formé par la base de la section tronconique du bassin 1, ou formé par la base 2, un angle β (figures 1 et 4). De préférence, l'angle β est inférieur à l'angle α. Avantageusement, l'angle β est inférieur à environ 25°. Avantageusement, l'angle β est d'environ 20°.

Le réacteur biologique comprend en outre une couverture 12 qui se positionne au dessus de l'épandeur 10, et clôt de façon substantiellement étanche au gaz le bassin 1. La couverture 12 est fixée par tous moyens adéquats, par exemple à l'aide de moyens venant se fixer sur des supports externes du bassin 1 ou du chenal-collecteur 5, ou par exemple par des moyens venant se fixer sur des supports internes disposés sur le conduit élévateur 9.

Un réacteur couvert présente l'avantage d'éviter la formation d'aérosols et de protéger les eaux en cours de traitement contre le froid en hiver, et contre la chaleur en été. De plus, cela offre la possibilité de recueillir le gaz en vue de l'incorporer éventuellement au processus épuratoire, et pour gérer le processus épuratoire sur base de la composition chimique des gaz.

La couverture 12 comprend un diffuseur 13 de section essentiellement tronconique, ou tronconique. Le diffuseur 13 a de préférence la forme d'un tronc de cône ou d'un cône. Le diffuseur 13 est positionné de telle sorte que le plan formé par la base du cône, ou la grande base du tronc de cône, se situe à un niveau plus bas que la crête de déversement du bassin formée par les moyens de sortie 4 de l'eau épurée. Ainsi, le diffuseur 13 met la liqueur mixte, qui est emprisonnée entre le plateau épandeur 10 et le diffuseur 13, sous légère charge.

Les parois latérales du diffuseur 13 forment, avec le plan horizontal, ou le plan formé par la base 2, un angle γ (figures 1 et 4) qui est inférieur à l'angle β que forment les parois du plateau épandeur 10 avec le même plan horizontal, les angles γ et β étant inférieurs à l'angle α que forment les parois du bassin 1 avec le même plan horizontal. De préférence, l'angle γ est inférieur à environ 12 degrés, avantageusement l'angle γ est d'environ 10 degrés.

La disposition particulière du plateau épandeur 10 et du diffuseur 13 entraîne le resserrement des extrémités du passage créé par ledit épandeur 10 et ledit diffuseur 13. Cela permet de compenser partiellement la perte de vitesse du flux radial en direction du pourtour du réacteur, et permet d'éviter des dépôts de biomasse sur le plateau épandeur 10.

La couverture 12 comprend en outre un collecteur de gaz 14 dont la fonction est de récupérer le gaz introduit par les moyens d'aération 7 dans la liqueur mixte. De préférence, le collecteur de gaz 14 se présente sous la forme d'une galerie circonférentielle raccordée au bord du diffuseur 13. De préférence, le collecteur de gaz 14 comprend au moins une buse (ou canalisation) 15 qui rassemble le gaz collecté en un point unique afin de permettre son évacuation ou de permettre sa réutilisation dans le processus épuratoire via une conduite 23 et une vanne 24.

La couverture 12 comprend en outre une paroi plongeante 16. De préférence, ladite paroi 16 forme l'une des parois du collecteur de gaz 14 et définit la limite extérieure de la couverture 12. La paroi 16, en combinaison avec la paroi extérieure du conduit élévateur 9 et la face inférieure du plateau-épandeur 10, délimite non seulement la zone de réaction 17B, mais elle délimite également, en combinaison avec la paroi du bassin 1, un espace 18 circonférentiel, de section transversale triangulaire, appelé « séparateur », et dans lequel la séparation de la liqueur mixte s'effectue.

La paroi 16 plonge à l'intérieur du bassin 1, et forme avec le plan vertical un angle compris entre 0 à 30°. Dans une première forme de réalisation, la paroi 16 forme un angle de 0° avec le plan vertical, c'est-à-dire que la paroi 16 plonge verticalement dans le bassin. Dans une seconde forme de réalisation, la paroi 16 forme un angle de 30° avec le plan vertical.

La paroi 16 n'est pas en contact avec la paroi du bassin 1 ce qui permet le passage de la liqueur mixte de la zone 17B vers le séparateur 18.

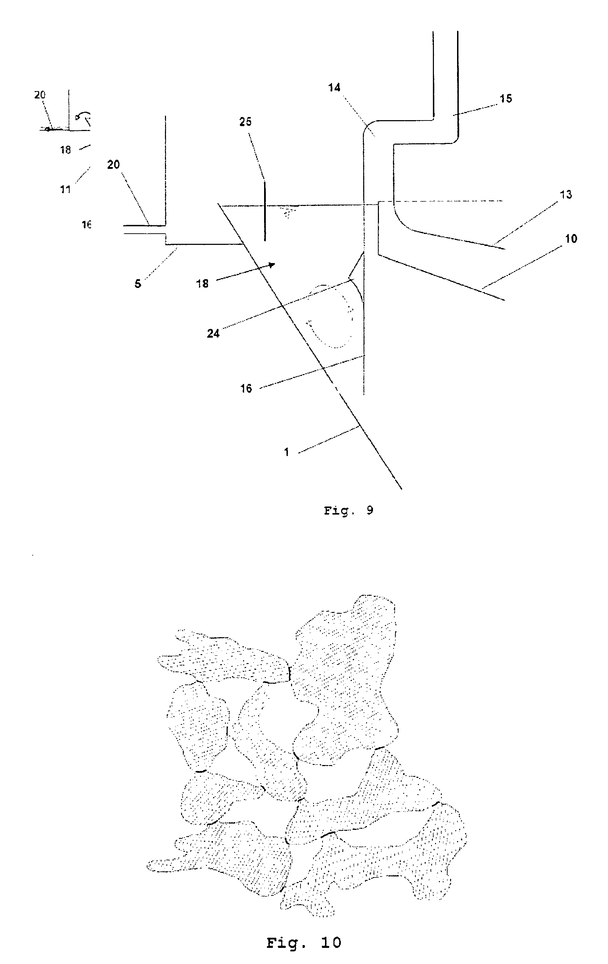

Dans toutes les formes de réalisations du réacteur selon l'invention, le séparateur 18 comprend, de préférence, une ailette 24 disposée sur la paroi 16 et/ou une paroi plongeante 25 devant le seuil de déversement (figure 9).

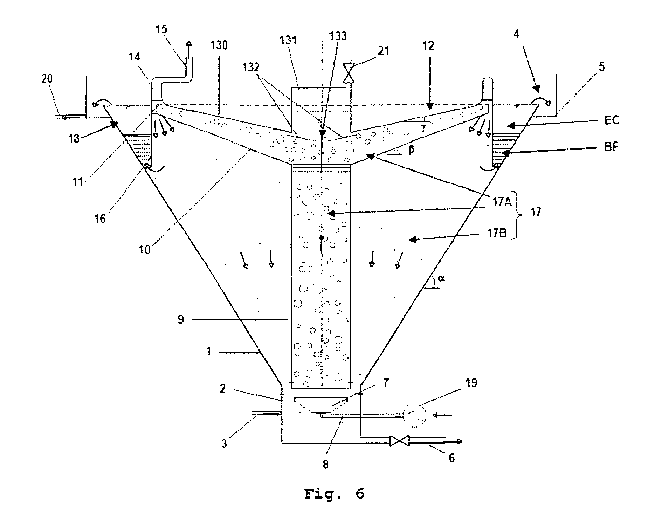

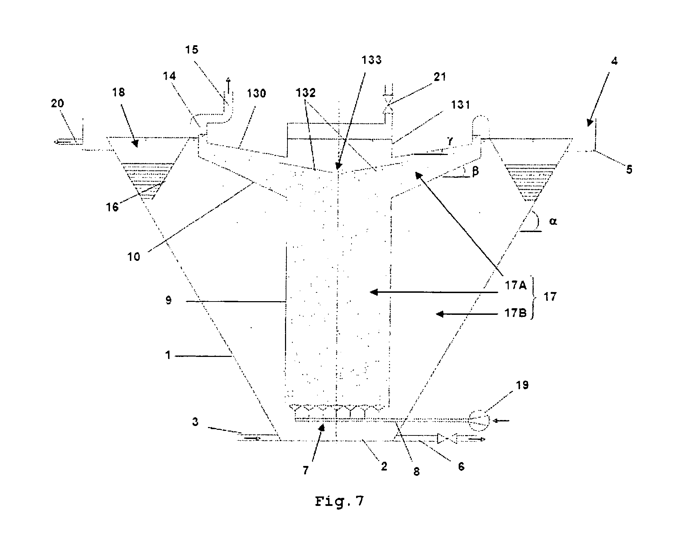

Dans des formes de réalisation particulières du réacteur selon l'invention, représentées aux figures 6 à 8, la couverture 12 comprend un diffuseur 130 de section essentiellement tronconique, de préférence ayant la forme d'un tronc de cône ou d'un cône, qui comprend une surélévation centrale 131 cylindrique agissant comme réserve de liqueur mixte lors de la régénération de la biomasse filtrante. Le diffuseur 130 comprend en outre un déflecteur 132 de section essentiellement conique, de préférence conique, comprenant une ouverture centrale 133.

### Fonctionnement du réacteur selon l'invention

Il convient de noter que le réacteur selon la présente invention fonctionne de la même manière, et présente les mêmes avantages, que le bassin 1 du réacteur biologique ait une forme de tronc de cône ou une forme prismatoïde. En effet, dans les deux cas, les éléments constitutifs sont les mêmes. Pour un réacteur en forme de tronc de cône, le plateau-épandeur 10 a une forme de tronc de cône, le diffuseur 13 ou 130, avec ou sans surélévation centrale 131 cylindrique, possède essentiellement une forme de tronc de cône ou une forme de cône, et la paroi plongeante 16 a une forme de cylindre ou d'un tronc de cône. Pour un réacteur prismatoïde, le champ d'aérateurs est rectangulaire, le conduit élévateur 9 est prismatique, le plateau-épandeur 10 et la couverture 12 ont la forme d'une trémie plate, la surélévation centrale 131 est prismatique, et la paroi plongeante 16 est un plan incliné.

Ainsi, indépendamment de la forme du bassin 1, le réacteur selon l'invention fonctionne de la manière suivante. Tout d'abord, le bassin 1 est rempli de liqueur mixte. Le remplissage est complet lorsque le niveau de l'eau atteint la crête de déversement formée par les moyens de sortie 4 de l'eau épurée du bassin 1. Le réacteur est alors prêt à fonctionner.

Une fois le réacteur rempli, il convient de noter que tout débit d'alimentation en eaux usées introduit dans le bassin 1 par les moyens d'entrée 3 de l'eau à épurer se traduit par un débit de déversement équivalent vers les moyens de sortie 4 de l'eau épurée en raison de la continuité du flux.

Le réacteur rempli, mais au repos, c'est-à-dire ayant un débit d'eau à épurer nul, les moyens d'alimentation en gaz 19, comprenant un compresseur par exemple, sont mis en marche. Les moyens d'aération 7 remplissent le conduit élévateur 9 d'une multitude de fines bulles de gaz.

Si l'on considère que le gaz est de l'air, le mélange liqueur mixte/air contenu dans le conduit élévateur 9 possède une densité inférieure à celle de la liqueur mixte seule, de sorte que le mélange liqueur mixte/air remonte le long du conduit 9 sous la poussée d'Archimède exercée par l'eau se trouvant à l'extérieur du conduit 9. Il en résulte alors un effet de pompage de type « air lift », et la liqueur mixte, ainsi aérée, remonte en permanence dans le conduit élévateur 9. Lorsque le flux liqueur mixte/air ascendant touche la couverture 12 du réacteur, il remplit l'espace entre le plateau-épandeur 10 et le diffuseur 13 et est dévié vers le pourtour dudit diffuseur 13. Sur ce chemin, le flux liqueur mixte/air perd en vitesse et les turbulences produisent un brassage intense ce qui favorise le transfert d'oxygène de l'air vers l'eau.

L'effet de pompage « air lift », qui est assimilable à une pompe à débit élevé sous faible charge, présente également l'avantage de compenser les pertes de charge internes du réacteur, de sorte qu'il fonctionne sans perte de hauteur géodésique entre l'entrée et la sortie.

Arrivé aux extrémités de plateau épandeur 10, l'air pauvre en oxygène s'échappe par le collecteur de gaz 14, alors que la liqueur mixte, enrichie en oxygène, déborde sur la couronne 11, quitte la zone d'aération et de brassage 17A pour descendre le long de la paroi plongeante 16 et rejoint la zone de réaction et d'amortissement 17B. Dans la zone 17B, il n'y a plus de brassage, et étant donné l'importance du volume de ladite zone 17B, la liqueur mixte s'y trouve dans un état d'écoulement laminaire descendant lent en direction du fond du réacteur, endroit à partir duquel la liqueur mixte pénètre à nouveau dans la zone d'aération et de brassage 17A et remonte vers le haut du réacteur par le conduit 9.

Lors du fonctionnement du réacteur, c'est-à-dire pour un réacteur dont le débit d'entrée de l'eau à épurer n'est pas nul, le débit d'entrée des eaux usées et le débit de l'aération se combinent. Comme le débit de l'air-lift est un multiple du débit d'entrée, les types de régimes d'écoulement dans le réacteur ne changent pas, ni dans la zone d'aération et de brassage 17A, ni dans la zone de réaction et d'amortissement 17B.

La vitesse de circulation de la liqueur mixte étant faible dans la zone de réaction et d'amortissement 17B, le temps de séjour de la liqueur mixte y est long ce qui permet à la biomasse d'assimiler l'oxygène et de métaboliser les substances organiques.

Le séparateur 18, qui est l'espace de section triangulaire formé par la paroi plongeante 16 et la paroi latérale du bassin 1, est quant à lui une zone particulièrement calme, substantiellement sans turbulences. Le débit de liqueur mixte qui entre dans le séparateur 18 est déterminé par le débit d'entrée de l'eau à épurer, néanmoins, c'est le régime laminaire dans la zone de réaction et d'amortissement 17B qui permet au séparateur 18 d'être libre de toutes turbulences.

Quand le réacteur est au repos (débit d'entrée de l'eau à épurer nul), le séparateur 18 n'est pas affecté par le mouvement laminaire de liqueur mixte dans la zone de réaction et d'amortissement 17B. Par contre, dans le réacteur en fonctionnement, et du fait de l'égalité des flux entrant/sortant, une partie de la liqueur mixte est refoulée sous la paroi plongeante 16 et rejoint le séparateur 18. Néanmoins, le séparateur 18 reste une zone particulièrement calme, substantiellement sans turbulences car le régime laminaire de la liqueur mixte dans la zone de réaction et d'amortissement 17B est maintenu.

Le flux alimentant le séparateur 18 donne naissance à des vitesses ascensionnelles qui sont de plus en plus faibles au fur et à mesure que l'on monte en niveau dans le séparateur 18. Dans l'hypothèse d'une parfaite uniformité du champ de vitesses ascensionnelles dans chaque section horizontale du séparateur 18, de la décroissance des vitesses au voisinage de la surface, et inversement de leur croissance en profondeur, cela permet aux flocs de biomasse de ne pas s'accumuler au fond du séparateur 18. Les flocs montent dans le séparateur 18 et s'immobilisent à un niveau d'équilibre, ledit niveau étant fonction du débit traversant le séparateur 18 pour une biomasse donnée.

Il a été surprenant d'observer que les flocs de biomasse, qui s'accumulent au niveau d'équilibre, forment un réseau immobile qui se présente sous la forme d'une structure globalement figée, et qui est rigidifiée par la « soudure » des flocs les uns aux autres qui se fait par l'intermédiaire de leur couche de mucilage (figure 10).

Etant donné la configuration poreuse de cette structure, elle peut être assimilée à une « biomasse filtrante » car, de façon surprenante, elle fonctionne comme un filtre volumique.

A la figure 1, la biomasse filtrante est désignée par « BF » et la lame d'eau claire qui la surmonte par « EC ».

Ainsi, le séparateur 18 se retrouve partiellement rempli par une biomasse filtrante, permettant la filtration de l'eau, mais empêchant le passage de flocs amenés par la liqueur mixte sous la paroi plongeante 16 et les déviant vers la zone de réaction 17B.

La présence de cette biomasse filtrante permet au réacteur biologique selon l'invention de travailler dans la chambre d'activation 17 (zones 17A et 17B) avec une teneur en matière sèche jusque 7 kg/m³.

Durant le fonctionnement du réacteur biologique selon l'invention, il a été constaté que la cohésion de la biomasse filtrante augmente avec le temps, ce qui augmente la rigidité du filtre. Or cette rigidification de la biomasse filtrante peut être préjudiciable à la filtration car des fissures dans le filtre peuvent apparaitre. De plus, l'apport en oxygène à la biomasse filtrante par le flux traversant le séparateur 18 peut être insuffisant pour couvrir ses besoins à long terme, ce qui peut mener également à une dissociation de la biomasse filtrante. Pour contrecarrer le phénomène de rigidification du filtre et l'appauvrissement de la biomasse en oxygène, il convient de la régénérer périodiquement. L'interruption de l'aération de la liqueur mixte permet de faire cet échange simplement sans équipement supplémentaire. En effet, l'arrêt de l'aération immobilise la biomasse dans la zone de réaction et d'amortissement 17 B à tel point qu'il se produit un tassement par décantation qui provoque l'entraînement de la biomasse filtrante vers la zone de réaction 17 par un effet de vases communicants. La durée de l'arrêt de l'aération est de 15 à 30 minutes. Suivant les conditions de température et de charge du réacteur le nombre de régénérations varie entre 4 et 10 par jour.

Dans les formes de réalisation particulières de l'invention représentées aux figures 6 à 8, la régénération de la biomasse filtrante se fait à l'aide d'une vanne 21 disposée sur la surélévation centrale 131 du diffuseur 130. En bloquant le départ de gaz à l'aide de la vanne 21, les gaz passant par l'orifice 133 forment un coussin de gaz sous la surélévation 131 ce qui a pour effet de chasser progressivement un volume de liqueur mixte équivalent vers le séparateur 18. En ouvrant d'un coup la vanne 21, le coussin de gaz disparaît instantanément et l'appel de liquide crée une vidange partielle brusque dans le séparateur 18, ce qui entraîne une partie de la biomasse filtrante vers la zone de réaction et d'amortissement 17B.

Au fur et à mesure du fonctionnement du réacteur selon l'invention, la teneur en biomasse du réacteur augmente, c'est pourquoi des soutirages périodiques de la boue excédentaire sont effectués grâce aux moyens d'évacuation 6 des boues excédentaires situés, de préférence, dans la partie inférieure du bassin 1.

Le réacteur biologique selon l'invention présente l'avantage d'être un réacteur combiné et mixte car il permet à la fois le traitement secondaire et l'élimination des nitrates de la liqueur mixte par dénitrification intermittente, dans la même enceinte. Pour ce traitement, le réacteur offre un volume de réaction bien supérieur aux réacteurs mixtes existants.

Pour un tel réacteur combiné et mixte, en phase aérobie, les moyens d'aération 7 de la liqueur mixte sont ceux décrits précédemment. En phase anaérobie les moyens d'aération 7 sont désactivés, ce qui entraîne l'appauvrissement de la liqueur mixte en oxygène, créant les conditions favorables à la dénitrification de la liqueur mixte ; le substrat est alors métabolisé par la biomasse. Pour éviter des carences locales en substrat, il convient de faire des malaxages périodiques de courte durée par enclenchement des moyens d'aération 7.

De plus, l'arrêt de l'aération entraîne l'arrêt du brassage de sorte que la biomasse contenue dans la zone de réaction commence à décanter et s'accumule à la base 2 du réacteur. Néanmoins, ces dépôts ne sont pas gênants car ils sont instantanément remis en circulation à chaque démarrage de l'aération.

A titre d'exemple, pour un cycle de traitement biologique secondaire et tertiaire d'environ deux heures et trente minutes, la phase aérobie peut durer environ une heure, la phase anaérobie environ une heure et trente minutes, une phase de dénitrification qui comprend une aération intermittente (ou syncopage) de trois malaxages d'une durée de cinq à dix minutes chacun.

En phase de dénitrification, l'arrêt de la circulation de gaz, outre le fait qu'il permet d'économiser l'énergie consommée par les moyens d'aération 7, permet simultanément la régénération de la biomasse filtrante comme cela a été décrit précédemment.

Le contrôle du passage des conditions aérobies aux conditions anaérobies peut être assuré par tout moyen adéquat. De préférence, il s'agit de moyens comprenant une minuterie, ou comprenant une sonde de nitrates.

Dans une autre forme de réalisation du réacteur selon l'invention, ledit réacteur peut comprendre en outre des moyens de recyclage de gaz, qui permettent de maintenir un brassage de la liqueur mixte pendant toute la durée du cycle de traitement biologique, à savoir également pendant la phase anaérobie.

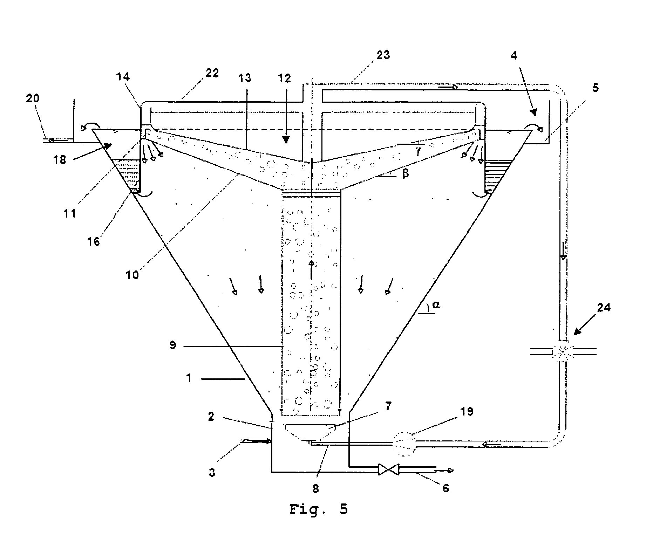

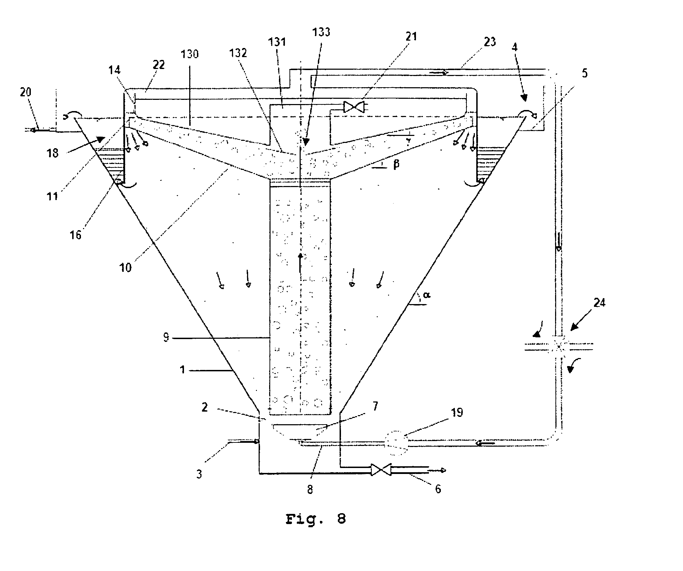

Comme le montrent les figures 5 et 8, le réacteur peut comprendre en outre une canalisation 23, raccordée à la conduite 22, permettant la recirculation du gaz vers les moyens d'alimentation en gaz 19. De plus, une vanne quatre voies 24, ou tout autre dispositif équivalent, permet d'alimenter la zone d'aération et de brassage 17A, soit par de l'air frais, donc riche en oxygène en phase aérobie, avec éjection de l'air récupéré, soit par de l'air recyclé, donc pauvre en oxygène en phase anaérobie avec recirculation en circuit fermé.

A titre d'exemple, dans les modes de réalisations du réacteur selon l'invention qui comprennent des moyens de recyclage de gaz, pour un cycle de traitement biologique secondaire et tertiaire, la phase d'aération dure environ une heure et la phase de recyclage (dénitrification) une heure trente minutes.

De plus, l'utilisation d'un brassage permanent peut être envisagée dans le cas où le brassage intermittent (syncopage) aurait une influence négative sur la structure des flocs de biomasse.

Quelque soit le mode de réalisation du réacteur selon l'invention, après le traitement biologique l'eau épurée peut être déversée directement dans un ruisseau ou tout autre émissaire. En effet, les analyses des caractéristiques physiques, biologiques et chimiques de l'eau épurée (tableau 1) montrent que le degré d'épuration des eaux traitées à l'aide du réacteur biologique selon l'invention est supérieur à celui des eaux traitées dans une station d'épuration classique ou à celui exigé par les recommandations en termes de rejet auxquelles les stations dépuration doivent répondre, comme par exemple les recommandations Abwasserverordnung (BGB1 IS 1108, 2625, 2461).

**Tableau 1 : Caractéristiques épuratoires mesurées sur le réacteur selon l'invention alimenté par des eaux usées domestiques.**

| **Grandeur caractéristique** | **Unité** | **Réacteur selon l'invention** | | **Recommandation sortie pour 14000 habitants-équivalent** |
|---|---|---|---|---|
| | | **Entrée** | **Sortie** | |
| Demande chimique en oxygène (DCO) | mg/l | 162 | 15 | <75 |
| Matières en suspension (MES) | mg/l | 65 | 2 | <30 |
| Ammonium (N-NH₄) | mg/l | 15 | 0.2 | <5 |
| Azote total (Nₜₒₜ ) | mg/l | 24 | 9 | <15 |

Le réacteur biologique selon l'invention peut en outre être couplé à tout dispositif de traitement primaire, comme par exemple des dispositifs de dégrillage, de dessablage, ou de dégraissage, tout dispositif de décantation, de traitement tertiaire complémentaire, de traitement des boues excédentaires, ou de traitement des gaz.

## Revendications

1. Un réacteur de traitement biologique des eaux usées comprenant un bassin (1) de section tronconique, des moyens d'entrée (3) de l'eau usée à épurer, des moyens de sortie (4) de l'eau épurée, des moyens d'évacuation (6) des boues excédentaires, des moyens d'alimentation en gaz (19), des moyens d'aération (7) disposés dans la partie inférieure dudit bassin (1), au moins un conduit élévateur (9) surplombant lesdits moyens d'aération (7), **caractérisé en ce que** le conduit élévateur comprend un plateau épandeur (10) de section tronconique qui comprend une couronne de déversement (11), une couverture (12) disposée sur ledit plateau épandeur (10), ladite couverture (12) comprenant un diffuseur (13) de section conique ou tronconique, un collecteur de gaz (14) et une paroi plongeante (16).

2. Le réacteur selon la revendication 1, dans lequel les parois latérales du bassin (1) forment, avec le plan horizontal formé par la base (2) dudit bassin (1), un angle α d'au moins 60°.

3. Le réacteur selon la revendication 1 ou 2, dans lequel les parois latérales du plateau épandeur (10) forment, avec le plan horizontal formé par la base (2) dudit bassin (1), un angle ß de moins de 25°.

4. Le réacteur selon l'une quelconque des revendications précédentes, dans lequel les parois latérales du diffuseur (13) forment, avec le plan horizontal formé par la base (2) du bassin (1), un angle γ de moins de 12°.

5. Le réacteur selon l'une quelconque des revendications précédentes, dans lequel la paroi plongeante (16) forme avec le plan vertical un angle compris entre 0 et 30°.

6. Le réacteur selon l'une quelconque des revendications précédentes, dans lequel les moyens d'aération (7) comprennent au moins un aérateur comprenant une membrane déformable percée de trous.

7. Le réacteur selon l'une quelconque des revendications précédentes, dans lequel les moyens d'alimentation en gaz (19) comprennent au moins un compresseur.

8. Le réacteur selon l'une quelconque des revendications précédentes, dans lequel le collecteur de gaz (14) se présente sous la forme d'une galerie circonférentielle raccordée au bord du diffuseur (13), et comprend une buse (15) d'évacuation du gaz.

9. Le réacteur selon l'une quelconque des revendications précédentes comprenant en outre des moyens de recyclage du gaz desdits moyens d'aération (7), lesdits moyens de recyclage du gaz comprenant au moins une canalisation (23) raccordée à la conduite (22) qui dirige ledit gaz vers une vanne à quatre voies (24) et vers les moyens d'alimentation en gaz (19) .

10. Le réacteur selon l'une quelconque des revendications précédentes, dans lequel la couverture (12) comprend un diffuseur (130) comprenant une surélévation centrale (131) cylindrique, un déflecteur (132) de section essentiellement conique, ledit déflecteur (132) comprenant une ouverture centrale (133).

11. Le réacteur selon l'une quelconque des revendications précédentes, dans lequel les moyens de sortie (4) de l'eau épurée comprennent un chenal-collecteur (5) disposé de façon circonférentielle sur la partie supérieure du bassin (1).

12. Le réacteur selon l'une quelconque des revendications précédentes, dans lequel le bassin (1) a la forme d'un tronc de cône ou une forme prismatoïde.

13. Une méthode de traitement des eaux usées comprenant les étapes suivantes :
a) prendre le réacteur biologique selon l'une quelconque des revendications 1 à 12,
b) remplir ledit réacteur avec de la liqueur mixte,
c) alimenter ledit réacteur avec de l'eau usée à épurer,
d) réaliser un traitement biologique aérobie de ladite eau usée en aérant le mélange de liqueur mixte et d'eau usée à l'aide d'un gaz,
e) réaliser la régénération de la biomasse filtrante par l'arrêt temporaire des moyens d'aération (7), ou au moyen de la vanne (21) de la surélévation centrale (131).
f) réaliser un traitement biologique anaérobie de ladite eau usée en interrompant périodiquement l'aération réalisé à l'étape d) ou en recyclant périodiquement ledit gaz,
g) séparer la liqueur mixte en eau épurée et en biomasse,
h) récupérer l'eau épurée.

14. La méthode selon la revendication 13 dans laquelle les étapes d) et f) forment un cycle de traitement biologique, et dans laquelle la durée de l'étape d) est d'environ une heure et la durée de l'étape f) d'environ 1 heure trente minutes pour un cycle de traitement biologique d'environ 2 heures et trente minutes.

## Claims

1. A wastewater biological treatment reactor comprising a basin (1) having a truncated cross-section, means (3) for feeding in the wastewater to be purified; means (4) for discharging the purified water, means (6) for removing the excess sludge, gas supply means (19), aeration means (7) placed in the lower portion of said basin (1), at least one elevating duct (9) overhanging said aeration means (7), **characterized in that** the elevating duct comprises a spreader plate (10) having a truncated cross-section which comprises an overflow crown (11), a cover (12) placed over said spreader plate (10), said cover (12) comprising a diffuser (13) having a conical or truncated cross-section, a gas collector (14) and a downflow baffle (16).

2. Reactor according to claim 1, wherein the lateral walls of the basin (1) form, with the horizontal plane formed by the base (2) of said basin (1), an angle α of at least 60°.

3. Reactor according to claim 1 or 2, wherein the lateral walls of the spreader plate (10) form, with the horizontal plane formed by the base (2) of said basin (1), an angle ß of less than 25°.

4. Reactor according to any of the previous claims, wherein the lateral walls of the diffuser (13) form, with the horizontal plane formed by the base (2) of the basin (1), and angle y of less than 12°.

5. Reactor according to any of the previous claims, wherein the downflow baffle (16) forms, with the vertical plane, an angle comprised between 0 and 30°.

6. Reactor according to any of the previous claims, wherein the aeration means (7) comprise at least one aerator comprising a deformable membrane pierced with holes.

7. Reactor according to any of the previous claims, wherein the gas supply means (19) comprise at least one blower.

8. Reactor according to any of the previous claims, wherein the gas collector (14) is in the form of a circumferential channel connected to the edge of the diffuser (13) and comprises a gas evacuation pipe (15).

9. Reactor according to any of the previous claims further comprising means for recycling the gas of said aeration means (7), said gas recycling means comprising at least one pipe (23) connected to the duct (22) which directs said gas toward a four-way valve (24) and toward the gas supply means (19).

10. Reactor according to any of the previous claims, wherein the cover (12) comprises a diffuser (130) with a cylindrical central raising (131), a deflector (132) having an essentially conical cross-section, said deflector (132) comprising a central opening (133).

11. Reactor according to any of the previous claims, wherein the means (4) for discharging the purified water comprise a collector-channel (5) arranged in a circumferential manner on the upper portion of the basin (1).

12. Reactor according to any of the previous claims, wherein the basin (1) has the shape of a frustum or a prismoid shape.

13. Method for treating wastewater comprising the following steps:
a) using the biological reactor according to any of claims 1 to 12;
b) filling said reactor with activated sludge mixture;
c) supplying said reactor with wastewater to be purified;
d) carrying out an aerobic biological treatment of said wastewater by aerating the mixture of activated sludge mixture and wastewater by means of gas;
e) regenerating the filtering biomass by temporarily stopping aeration means (7) or by means of the valve (21) of the central raising (131).
f) carrying out an anaerobic biological treatment of said wastewater by periodically interrupting the aeration carried out at step d) or by periodically recycling said gas;
g) separating the activated sludge mixture into purified water and biomass;
h) collecting the purified water.

14. Method according to claim 13, wherein the steps d) and f) gather to a biological treatment cycle, and wherein the duration of step d) is about one hour and the duration of step f) is about one hour and thirty minutes for a biological treatment cycle of about two hours and thirty minutes.

## Patentansprüche

1. Reaktor zur biologischen Behandlung von Abwässern, umfassend ein Becken (1) mit kegelstumpfförmigem Querschnitt, Mittel (3) zum Einlaufen des zu klärenden Abwassers, Mittel (4) zum Ablaufen des geklärten Wassers, Mittel (6) zum Austragen der Klärschlämme, Gaszufuhrmittel (19), Belüftungsmittel (7), die in dem unteren Teil des Beckens (1) angeordnet sind, mindestens ein Steigrohr (9), welches die Belüftungsmittel (7) überragt, **dadurch gekennzeichnet, dass** das Steigrohr einen Verteilerteller (10) mit kegelstumpfförmigem Querschnitt, der eine Überlaufkrone (11) umfasst, eine Abdeckung (12), die über dem Verteilerteller (10) angeordnet ist, umfasst, wobei die Abdeckung (12) einen Diffusor (13) mit kegelförmigem oder kegelstumpfförmigem Querschnitt, einen Gassammler (14) und eine Tauchwand (16) umfasst.

2. Reaktor nach Anspruch 1, wobei die Seitenwände des Beckens (1) mit der waagerechten Ebene, die durch die Basis (2) des Beckens (1) gebildet wird, einen Winkel α von mindestens 60° bilden.

3. Reaktor nach Anspruch 1 oder 2, wobei die Seitenwände des Verteilertellers (10) mit der waagerechten Ebene, die durch die Basis (2) des Beckens (1) gebildet wird, einen Winkel β von weniger als 25° bilden.

4. Reaktor nach einem der vorhergehenden Ansprüche, wobei die Seitenwände des Diffusors (13) mit der waagerechten Ebene, die durch die Basis (2) des Beckens (1) gebildet wird, einen Winkel γ von weniger als 12° bilden.

5. Reaktor nach einem der vorhergehenden Ansprüche, wobei die Tauchwand (16) mit der senkrechten Ebene einen Winkel zwischen 0 und 30° bildet.

6. Reaktor nach einem der vorhergehenden Ansprüche, wobei die Belüftungsmittel (7) mindestens einen Belüfter mit verformabarer gelöcherter Membran umfassen.

7. Reaktor nach einem der vorhergehenden Ansprüche, wobei die Gaszufuhrmittel (19) mindestens ein Gebläse umfassen.

8. Reaktor nach einem der vorhergehenden Ansprüche, wobei der Gassammler (14) sich in Form einer umlaufenden Gallerie darstellt, die sich an dem Rand des Diffusors (13) anschließt, und ein Rohr (15) zum Abziehen des Gases umfasst.

9. Reaktor nach einem der vorhergehenden Ansprüche, ferner umfassend Mittel zur Rezirkulation des Gases der Belüftungsmittel (7), wobei die Mittel zur Rezirkulation des Gases mindestens eine Rohrleitung (23) umfassen, die an der Leitung (22) angeschlossen ist, die das Gas auf ein Vier-WegeVentil (24) und auf die Gaszufuhrmittel (19) hineinführt.

10. Reaktor nach einem der vorhergehenden Ansprüche, wobei die Abdeckung (12) einen Diffusor (130) umfasst, der eine zylindrische zentrale Erhebung (131) und eine Ablenkplatte (132) mit einem im Wesentlichen kegelförmigen Querschnitt umfasst, wobei die Ablenkplatte (132) im Mittelpunkt mit einer Öffnung (133) versehen ist.

11. Reaktor nach einem der vorhergehenden Ansprüche, wobei die Mittel (4) zum Ablaufen des geklärten Wassers eine Sammelrinne (5) umfassen, die umlaufend auf dem oberen Teil des Beckens (1) angeordnet ist.

12. Reaktor nach einem der vorhergehenden Ansprüche, wobei das Becken (1) die Form eines Kegelstumpfes oder eines Prismatoids aufweist.

13. Verfahren zur Behandlung des Abwassers, umfassend folgende Schritte:
a) Verwenden des biologischen Reaktors nach einem der Ansprüche 1 bis 12,
b) Füllen des Reaktors mit einem Belebtschlamm-Gemisch,
c) Versorgen des Reaktors mit dem zu klärenden Abwassers,
d) Ausführen einer aeroben biologischen Behandlung des Abwassers durch Belüften der Mischung aus Belebtschlamm-Gemisch und Abwasser anhand eines Gases,
e) Ausführen der Regenerierung des Biomassefilters durch zeitweiliges Abschalten der Belüftungsmittel (7) oder anhand des Ventils (21) der zentralen Erhebung (131),
f) Ausführen einer anaeroben biologischen Behandlung des Abwassers durch zeitweiliges Unterbrechen der nach Schritt d) ausgeführten Belüftung oder durch zeitweilige Rezirkulation des Gases,
g) Trennen des Flüssigkeitsgemischs in Klarwasser und Biomasse,
h) Wiedergewinnen des Klarwassers.

14. Verfahren nach Anspruch 13, wobei die Schritte d) und f) einen biologischen Behandlungszyklus bilden, und wobei Schritt d) ungefähr eine Stunde und Schritt f) ungefähr 1 Stunde und dreißig Minuten dauern für einen biologischen Behandlungszyklus von ungefähr 2 Stunden und dreißig Minuten.
